# EUROPÄISCHE PATENTSCHRIFT

(11) **EP 2 141 383 B1**
(45) Veröffentlichungstag und Bekanntmachung des Hinweises auf die Patenterteilung: **12.12.2012**
(21) Anmeldenummer: 09164116.7
(22) Anmeldetag: 30.06.2009
(51) Int. Cl.: F16F 15/123, F16H 45/02

(54) **Hydrodynamische Kopplungseinrichtung**
Hydrodynamic coupling device
Dispositif d'accouplement hydrodynamique

(30) Priorität: 04.07.2008 DE 102008040164
(43) Veröffentlichungstag der Anmeldung: 06.01.2010
(73) Patentinhaber: ZF Friedrichshafen AG, 88038 Friedrichshafen (DE)
(72) Erfinder: Wack, Erwin, 97464, Niederwerrn (DE)

(56) Entgegenhaltungen:
- EP-A- 1 703 167
- EP-A- 1 795 780
- GB-A- 2 308 173
- US-A- 4 138 003
- US-A- 4 987 980

## Beschreibung

Die vorliegende Erfindung betrifft eine hydrodynamische Kopplungseinrichtung, insbesondere einen hydrodynamischen Drehmomentwandler, umfassend ein an eine Antriebswelle koppelbares Gehäuse mit einem Pumpenrad und ein in einem Innenraum des Gehäuses angeordnetes, vom Pumpenrad antreibbares mit einer Abtriebswelle koppelbares Turbinenrad, eine Überbrückungskupplung zur wahlweisen Kopplung des Gehäuses mit einem Abtriebsorgan, und eine Dämpferanordnung im Drehmomentübertragungsweg zu dem Abtriebsorgan, die Dämpferanordnung umfassend ein erstes Dämpferelement und ein gegen die Wirkung einer Dämpferfederanordnung bezüglich des ersten Dämpferelements um eine Drehachse drehbares zweites Dämpferelement, wobei die Dämpferfederanordnung eine Mehrzahl von in Umfangsrichtung verteilt liegende Dämpferfedereinheiten aufweist und in Zuordnung zu jeder Dämpferfedereinheit am ersten Dämpferelement und am zweiten Dämpferelement Abstützbereiche zum Abstützen der Umfangsendbereiche der Dämpferfedereinheiten vorgesehen sind.

Derartige hydrodynamische Kopplungseinrichtungen werden typischerweise im Antriebsstrang eines Kraftfahrzeugs zwischen Motor und Getriebe angeordnet, um auch dann eine Kraftübertragung zwischen der Kurbelwelle des Motors und der Eingangswelle des Getriebes zu ermöglichen, wenn diese sich mit unterschiedlichen Drehzahlen drehen. Die in der hydrodynamischen Kopplungseinrichtung angeordnete Dämpferanordnung ist zur Dämpfung von Torsionsschwingungen des Antriebsstrangs vorgesehen.

Um niederfrequente Torsionsschwingungen zu dämpfen, die beispielsweise unmittelbar oberhalb der Leerlaufdrehzahl, beispielsweise im Drehzahlbereich zwischen 1000 U/min bis 1800 U/min, des Motors auftreten, ist es vorteilhaft, wenn die Dämpferfederanordnung der Dämpferanordnung sehr weich ist, also eine verhältnismäßig kleine Federhärte aufweist. Bei einer sehr weichen Dämpferfederanordnung tritt bei Torsionsschwingungen mit großer Amplitude aber das Problem auf, dass die Dämpferanordnung ihre dämpfende Wirkung verliert, wenn die Dämpferelemente in Anschlag oder die Dämpferfederanordnung auf Block gehen. Durch eine Torsionsschwingung mit großer Amplitude entsteht eine große Relativdrehung der Dämpferelemente bezüglich einander, der die Dämpferfederanordnung entgegenwirken soll. In der Dämpferfederanordnung vorhandene Dämpferfedern können dann über ihren elastischen Bereich hinaus komprimiert werden. Beispielsweise werden Schraubenfedern soweit gestaucht, dass sie auf Block gehen. Viele bekannte Dämpferanordnungen besitzen deswegen auch Drehwinkelbegrenzer, die bei einem vorbestimmten Drehwinkel der Dämpferelemente bezüglich einander in Anschlag gehen, um zu verhindern, dass die Begrenzung des Drehwinkels durch die auf Block gehenden Federn erfolgt.

Eine hydrodynamische Kopplungseinrichtung gemäß dem Oberbegriff des Anspruchs 1 ist aus der US-A-4,987,980 bekannt. Eine Dämpferanordnung dieser bekannten hydrodynamischen Kopplungseinrichtung umfasst eine Gruppe von in Umfangsrichtung um eine Drehachse verteilt liegenden Dämpferfedereinheiten mit jeweils zwei ineinander geschachtelten Hauptfedern, also im gesamten Relativdrehwinkelbereich wirksamen Federn, in welchen eine kürzere, also bei kleinen Relativdrehwinkeln nicht wirksame Zusatzfeder aufgenommen ist. Radial gestaffelt dazu liegt eine weitere Gruppe von in Umfangsrichtung um die Drehachse verteilten Dämpferfedereinheiten, welche nur mit ineinander geschachtelten Hauptfedem, also im gesamten Drehwinkelbereich wirksamen Federn, jedoch ohne Zusatzfeder ausgebildet sind. Sowohl bei der inneren, als auch der äußeren Umfangsverteilung von Dämpferfedereinheiten sind alle darin jeweils enthaltenen Dämpferfedereinheiten zueinander identisch aufgebaut.

Wird kein Drehmoment auf die Dämpferanordnung ausgeübt, nehmen die Dämpferelemente eine Neutral-Relativdrehlage bezüglich einander ein. Wird auf die Dämpferanordnung ein Drehmoment ausgeübt, werden die Dämpferelemente bezüglich einander aus der Neutral-Relativdrehlage so weit verdreht, bis die Dämpferfederanordnung ein gleich großes entgegenwirkendes Drehmoment bewirkt. Dabei nehmen mit zunehmendem auf die Dämpferanordung ausgeübten Drehmoment die Dämpferelemente zuerst einen Drehwinkel bezüglich einander im ersten Drehwinkelbereich und anschließend im zweiten Drehwinkelbereich ein.

Dadurch, dass im ersten Drehwinkelbereich nur die Hauptfedern wirken, besitzt die Dämpferfederanordnung im ersten Drehwinkelbereich eine geringere Federhärte als im zweiten Drehwinkelbereich, in dem auch wenigstens eine Zusatzfeder wirkt. Die Federhärte der Dämpferfederanordnung im ersten Drehwinkelbereich kann mit den Federhärten der Hauptfedern auf die niederfrequenten zu dämpfenden Torsionschwingungen eingestellt werden. Die Federhärte im zweiten Drehwinkelbereich setzt sich aus den Federhärten der Hauptfedern und wenigstens einer Zusatzfeder zusammen und kann durch die Wahl der Federhärte der wenigstens einen Zusatzfeder derart eingestellt werden, dass auch bei großen Drehmomentschwankungen eine dämpfende Wirkung der Dämpferanordnung bestehen bleibt. Das Ineinanderschachteln von Haupt- und Zusatzfeder führt zu dem weiteren Vorteil, dass durch die Zusatzfeder kein weiterer Bauraum innerhalb der Dämpferanordnung verbraucht wird. Damit kann bei gleicher Stabilität die räumliche Ausdehnung der Dämpferelemente beibehalten werden.

Bei einer Weiterbildung der Erfindung kann vorgesehen sein, dass bei in einer Neutral-Relativdrehlage bezüglich einander positionierten Dämpferelementen wenigstens eine einer Hauptfeder zugeordnete Zusatzfeder kürzer ist als die Hauptfeder. Bei dieser vorteilhaften Weiterbildung der Erfindung muss der konstruktive Aufbau von Dämpferelementen, die für den Einsatz wenigstens einer Hauptfeder entworfen wurden, nicht geändert werden. Die für die Hauptfeder vorgesehenen Abstützbereiche an den Dämpferelementen können zum Abstützen der Umfangsendbereiche der der Hauptfeder zugeordneten Zusatzfeder verwendet werden.

Weiter kann vorgesehen sein, dass bei in einer Neutral-Relativdrehlage bezüglich einander positionierten Dämpferelementen wenigstens eine einer Hauptfeder zugeordnete Zusatzfeder mindestens so lang ist, wie die Hauptfeder.

Die einer Hauptfeder zugeordnete wenigstens eine Zusatzfeder kann innerhalb der Hauptfeder angeordnet sein. Es ist aber auch möglich, dass eine einer Hauptfeder zugeordnete Zusatzfeder die Hauptfeder umgibt.

Die vorliegende Erfindung wird nachfolgend mit Bezug auf die beiliegenden Figuren beschrieben. Es zeigt:
- Fig. 1: einen Teillängsschnitt eines hydrodynamischen Drehmomentwandlers in Prinzipansicht;

- Fig. 2: einen Teillängsschnitt einer Baugruppe eines hydrodynamischen Drehmomentwandlers;
- Fig. 3: eine Draufsicht in axialer Richtung auf die Zentralscheibe einer Dämpferanordnung der in Fig. 2 gezeigten Baugruppe;
- Fig. 4: eine der Fig. 3 entsprechenden Darstellung einer alternativen Ausgestaltungsform;
- Fig. 5: eine Prinzipansicht von Abstützbereichen für drei ineinander geschachtelte Federn einer weiteren Ausgestaltungsform einer Dämpferanordnung.

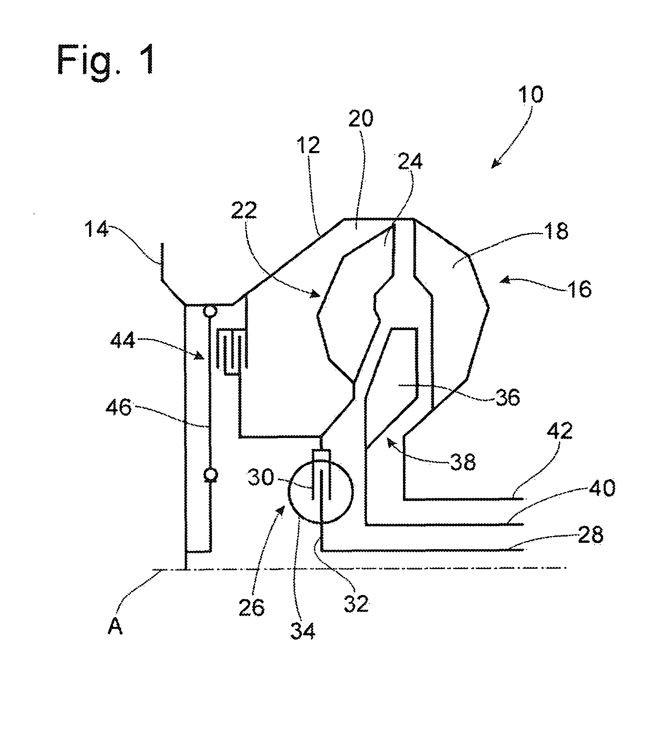

In Fig. 1 ist ein in einem Antriebsstrang eines Fahrzeugs beispielsweise zwischen einer Brennkraftmaschine und einer Getriebeeingangswelle vorzusehender hydrodynamischer Drehmomentwandler allgemein mit 10 bezeichnet. Der Drehmomentwandler 10 umfasst eine Gehäuseanordnung 12, die über eine daran vorgesehene Kopplungsanordnung 14 mit einer Antriebswelle, also beispielsweise einer Kurbelwelle einer Brennkraftmaschine, zur gemeinsamen Drehung um eine Drehachse A zu koppeln ist. Am Wandlergehäuse 12 ist ein Pumpenrad 16 gebildet, das eine Mehrzahl von an einer Innenseite des Wandlergehäuses 12 vorgesehenen und in Umfangsrichtung aufeinander folgenden Pumpenradschaufeln 18 umfasst. In einem Innenraum 20 des Wandlergehäuses 12 ist ein Turbinenrad 22 vorgesehen. Dieses umfasst eine Mehrzahl von in Umfangsrichtung um die Drehachse A aufeinander folgenden Turbinenradschaufeln 24. Das Turbinenrad 22 ist über eine Torsionsschwingungsdämpferanordnung 26 mit einer als Abtriebsorgan wirksamen Turbinennabe 28 gekoppelt, die zur Aufnahme einer nicht dargestellten Getreibeeingangswelle dient. Die Torsionschwingungsdämpferanordnung 26 umfasst ein mit dem Turbinenrad 22 drehfest verbundenes Dämpferelement 30 und ein mit der Turbinennabe 28 drehfest verbundenes Dämpferelement 32, die bezüglich einander gegen die Wirkung einer Dämpferfederanordnung 34 verdrehbar sind.

Radial innen zwischen den Pumpenradschaufeln 18 und den Turbinenradschaufeln 24 liegen Leitradschaufeln 36 eines allgemein mit 38 bezeichneten Leitrads. Dieses ist auf einer Stütz-Hohlwelle 40 in einer Richtung um die Drehachse A drehbar getragen und umgibt die Turbinennabe 28. Die Stütz-Hohlwelle 40 umgebend ist eine mit dem Wandlergehäuse 12 fest verbundene Pumpennabe 42 vorgesehen.

Der hydrodynamische Drehmomentwandler 10 umfasst ferner eine allgemein mit 44 bezeichnete Überbrückungskupplung. Diese ist abtriebsseitig beispielsweise über die Torsionsschwingungsdämpferanordnung 26 mit der Turbinennabe 28 gekoppelt und mit dem Turbinenrad 22 starr verbunden. Es sei jedoch nicht ausgeschlossen, dass die Überbrückungskupplung 44 starr mit der Turbinennabe 28 verbunden und über die Torsionsschwingungsdämpferanordnung 26 mit dem Turbinenrad 22 gekoppelt ist oder dass das Turbinenrad 22 starr mit der Turbinennabe 28 verbunden und über die Torsionsschwingungsdämpferanordnung 26 mit der Überbrückungskupplung 44 gekoppelt ist.

Mit der Überbrückungskupplung 44 ist eine direkte mechanische Kopplung zwischen dem Wandlergehäuse 12 und der Turbinenabe 28 realisierbar. Zur Herstellung der Kupplungsverbindung kann die Überbrückungskupplung 44 durch die Axialverlagerung eines Kolbenelements 46 eingerückt werden, das im Innenraum 20 des Wandlergehäuses 12 angeordnet ist.

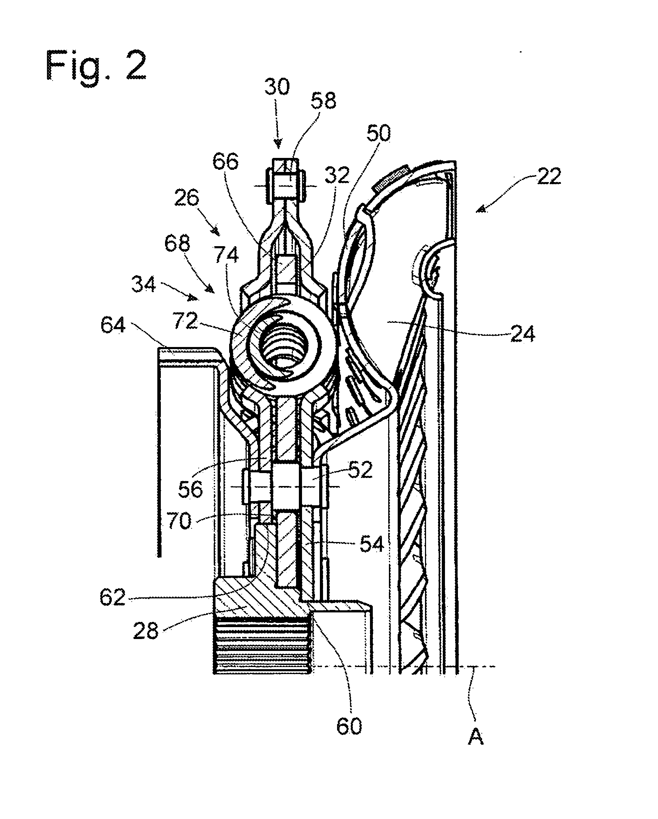

Fig. 2 zeigt das Turbinenrad 22 und die Dämpferanordnung 26 eines erfindungsgemäßen hydrodynamischen Drehmomentwandlers im Längsschnitt.

Die Turbinenradschaufeln 24 sind alle in einer die Achse A in Umfangsrichtung umgebenden Rundung einer Turbinenradschale 50 angeordnet und dort mit diesem verbunden. Radial weiter innen ist die Turbinenradschale 50 über eine Mehrzahl von Bolzen 52 mit zwei die Achse A umgebenden Deckscheibenelementen 54, 56 verbunden, die miteinander mittels der Bolzen 52 und am radial äußeren Ende mittels Niete 58 verbunden sind. Die Deckscheibenelementen 54 und 56 bilden das erste Dämpferelement 30 der Dämpferanordnung 26. Sie sind an ihren Innenumfängen 60, 62 auf der Turbinennabe 28 abgestützt und dort bezüglich der Turbinennabe 28 drehbar gelagert. Auf der der bezüglich der Dämpferanordnung 26 dem Turbinenrad 22 gegenüberliegenden Seite ist ein Blechteil 64 zu erkennen, das als Ausgangselement der in der Fig. 1 dargestellten Überbrückungskupplung 44 dient und das auch mittels der Bolzen 52 mit den Deckscheibenelementen 54, 56 drehfest verbunden ist.

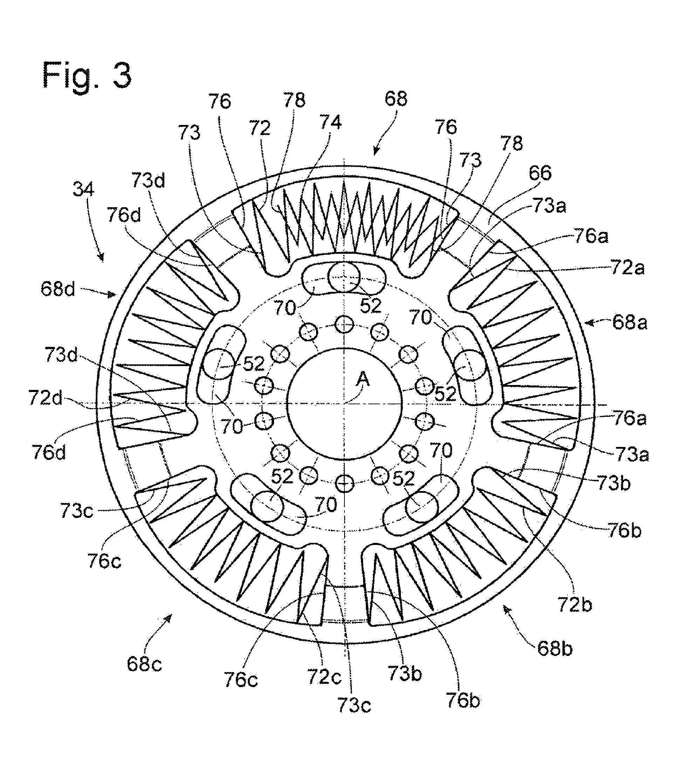

Die Dämpferanordnung 26 umfasst neben den Deckscheibenelementen 54 und 56 eine die Achse A umgebende Zentralscheibe 66 und eine Mehrzahl die Achse A in Umfangsrichtung umgebende Dämpferfedereinheiten 68, die die Dämpferfederanordnung 34 der Dämpferanordnung 26 bilden. Die Zentralscheibe 66 bildet das zweite Dämpferelement 32 der Dämpferanordnung 26 und ist in ihrem Innenumfangsbereich drehfest mit der Turbinennabe 28 verbunden oder ggf. integral ausgebildet. Die Bolzen 52, die die Deckscheibenelemente 54, 56 verbinden, sind durch Öffnungen 70 der Zentralscheibe 66 geführt, so dass die Zentralscheibe 66 und die Deckscheibenelemente 54, 56 bezüglich einander um die Achse A um einen Drehwinkel verdreht werden können, der durch die Länge der Öffnungen 70 bestimmt ist, wie es weiter unten bei Fig. 3 erläutert wird.

Die in der Fig. 2 dargestellte Dämpferfedereinheit 68 umfasst eine äußere Hauptfeder 72 und eine innerhalb der Hauptfeder 72 angeordnete Zusatzfeder 74.

Fig. 3 stellt eine Draufsicht auf die Zentralscheibe 66 der Dämpferanordnung 26 aus der Fig. 2 mit einer Dämpferfederanordnung 34 einer ersten Ausgestaltungsform aus einer Mehrzahl von Dämpferfedereinheit 68, 68a, 68b, 68c, 86d dar. Eine Mehrzahl von Hauptfedern 72, 72a, 72b, 72c, 72d ist die Achse A in Umfangsrichtung umgebend innerhalb von in der Zentralscheibe 66 gebildeten Aufnahmen angeordnet. Mit ihren Umfangsendbereichen 73, 73a, 73b, 73c, 73d sind die Hauptfedern 72, 72a, 72b, 72c, 72d an Abstützbereichen 76, 76a, 76b, 76c, 76d abgestützt. Die Haupfeder 72 und die Zusatzfeder 74 sind ineinander geschachtelt. Dabei ist die Zusatzfeder 74 innerhalb der Hauptfeder 72 angeordnet.

In den Öffnungen 70 der Zentralscheibe 66 sind die fest mit den Deckscheibenelementen 54 und 56 verbundenen Bolzen 52 zu erkennen. Bei der in der Fig. 3 gezeigten Stellung, bei der sich die Bolzen 52 in der bezüglich der in Umfangsrichtung gelegenen Mitte der Öffnungen 70 befinden, befinden sich die Zentralscheibe 66 und die nicht in der Fig. 3 gezeigten Deckscheibenelemente 54, 56 in einer Neutral-Relativdrehlage. Die Zentralscheibe 66 und die Deckscheibenelemente 54, 56 können bezüglich einander so weit um die Achse A verdreht werden, bis die Bolzen 52 mit einem Umfangsende der Öffnungen 70 in Anschlag stehen.

Werden die Zentralscheibe 66 und die Deckscheibenelemente 54 und 56 bezüglich einander ausgehend von der in der Fig. 3 dargestellten Neutral-Relativdrehlage bis zu einer Enddrehlage verdreht, bei der die Bolzen 52 mit den Umfangsenden der Öffnungen 70 in Anschlag stehen, geschieht Folgendes: Nach einem eventuell vorhandenen Freiwinkelbereich, der dadurch entstehen kann, dass die Abstützbereiche der Deckscheibenelemente 54, 56 erst nach einem bestimmten Drehwinkel die Hauptfedern 72, 72a, 72b, 72c, 72d an deren Umfangsendbereichen abstützen, beginnen diese, dem auf die Dämpferanordnung wirkenden Drehmoment entgegenzuwirken. In einem ersten Drehwinkelbereich kann die Relativdrehung zwischen der Zentralscheibe 66 und den Deckscheibenelementen 54, 56 durch Erhöhung des auf die Dämpferanordnung 26 wirkenden Drehmoments zunächst so lange fortfahren, bis auch ein Abstützbereich der Deckscheibenelemente 54, 56 mit einem Umfangsendbereich 78 der Zusatzfeder 74 in Berührung kommt. In dem an den ersten Drehwinkelbereich anschließenden zweiten Drehwinkelbereich wirkt bei weiter fortschreitender Relativdrehung dann auch die Zusatzfeder 74 dem auf die Dämpferanordnung 26 ausgeübten Drehmoment entgegen. Am Ende des zweiten Drehwinkelbereichs gehen die Bolzen 52 mit einem Umfangsende der Öffnungen 70 in Anschlag und der Relativdrehwinkel zwischen der Zentralscheibe 66 und den Deckscheibenelementen 54, 56 kann nicht weiter erhöht werden. Die Federhärte der Dämpferanordnung 26 bestimmt sich im ersten Drehwinkelbereich aus den parallelgeschalteten Hauptfedern 72, 72a, 72b, 72c und 72d, im zweiten Drehwinkelbereich aus den parallelgeschalteten Hauptfedern 72, 72a, 72b, 72c, 72d zusammen mit der Zusatzfeder 74.

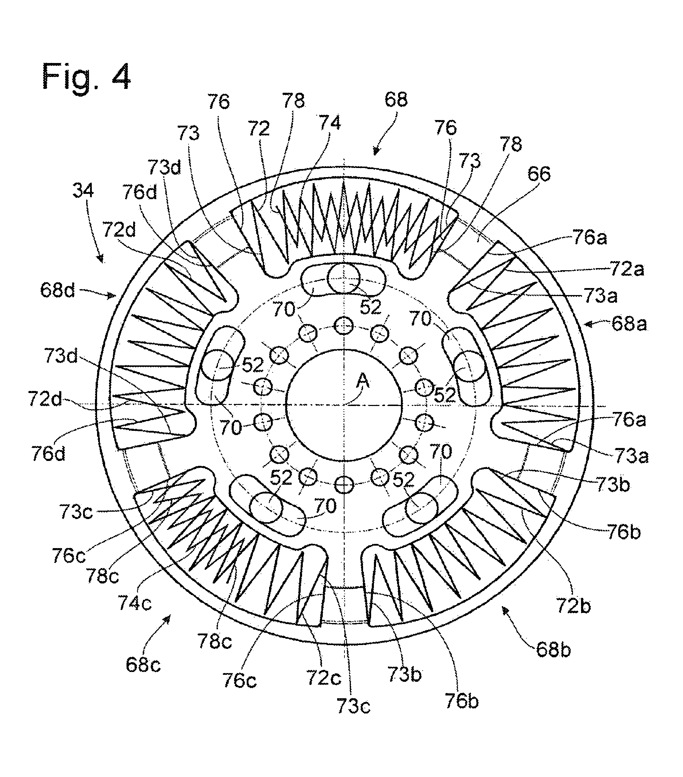

Die Fig. 4 stellt eine Draufsicht auf die Zentralscheibe 66 der Dämpferanordnung einer zweiten Ausgestaltungsform des hydrodynamischen Drehmomentwandlers aus der Fig. 2 in axialer Richtung dar, wobei bei einer weiteren Dämpferfedereinheit 68c eine weitere Zusatzfeder 74c innerhalb der Hauptfeder 72c angeordnet ist. Die Zusatzfeder 74c ist in der in der Fig. 4 dargestellten Neutral-Relativdrehlage kürzer als die Zusatzfeder 74. Die Wirkung der Dämpferfederanordnung aus der Fig. 4 unterscheidet sich von der aus der Fig. 3 erst ab dem Relativdrehwinkel, bei dem ein dem Abstützbereich 76c der Zentralscheibe 66 entsprechender Abstützbereich der Deckscheibenelemente 54, 56 mit dem Umfangsendbereich 78c der Zusatzfeder 74c in Berührung kommt. Ab diesem Drehwinkel wirken die Hauptfedern 72, 72a, 72b, 72c, 72d und die Zusatzfedern 74, 74c dem auf die Dämpferanordnung ausgeübten Drehmoment entgegen. Die Federhärte der Federanordnung bestimmt sich dann aus den parallelgeschalteten Hauptfedern 72, 72a, 72b, 72c, 72d und Zusatzfedern 74, 74c.

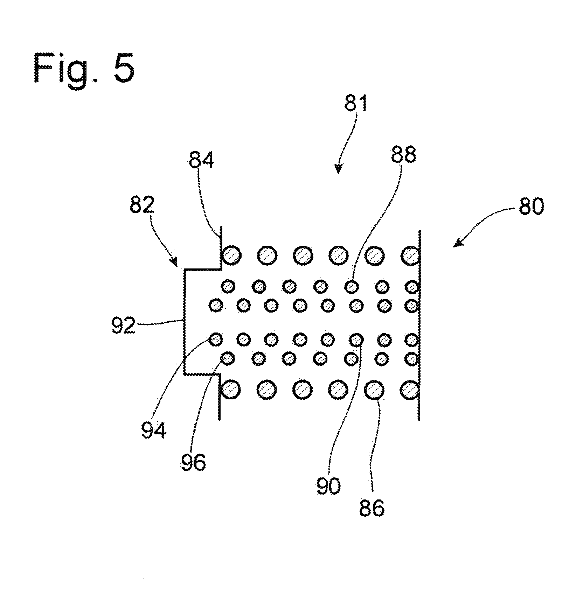

Bei den zuvor dargestellten Ausgestaltungsformen einer Dämpferanordnung für eine erfindungsgemäße hydrodynamische Kopplungseinrichtung wurden die unterschiedlichen Drehwinkelbereiche mit unterschiedlichen Federhärten der Dämpferfederanordnung durch verschieden lange Zusatzfedern, die kürzer als die Hauptfedern sind, realisiert. Im Gegensatz dazu zeigt Fig. 5 eine Prinzipansicht einer Dämpferfedereinheit 81 zusammen mit einem Abstützbereich 80 eines Dämpferelements, beispielsweise einer Zentralscheibe, wie sie in der Fig. 2 dargestellt ist, und einem Abstützbereich 82 eines anderen Dämpferelements, beispielsweise die in der Fig. 2 dargestellten Deckscheibenelemente 54, 56. Die Dämpferfedereinheit 81 umfasst eine Hauptfeder 86 und zwei in die Hauptfeder 86 geschachtelte Zusatzfedern 88, 90. Die Zusatzfeder 88 ist innerhalb der Hauptfeder 86, die Zusatzfeder 90 wiederum innerhalb der Zusatzfeder 88 angeordnet. Der Abstützbereich 82 weist einen die Hauptfeder 86 abstützenden Hauptabstützbereich 84 und einen die Zusatzfedern 88 und 90 abstützenden Zusatzabstützbereich 92 auf, die gegenüber einander in Richtung der Längsachse der Federn versetzt sind.

Bei der in der Fig. 5 dargestellten Neutral-Relativdrehlage der die Abstützbereiche 80 und 82 aufweisenden Dämpferelemente ist die unbelastete Zusatzfeder 88 genauso lang wie die vorgespannt eingebaute Hauptfeder 86, und die unbelastete Zusatzfeder 90 ist in diesem Zustand länger als die beiden Federn 86 und 88. Werden die Dämpferelemente bezüglich einander derart verdreht, dass die Abstützbereiche 82 und 80 aufeinander zubewegt werden, so wirkt in einem ersten Drehwinkelbereich die Hauptfeder 86 der Drehbewegung entgegen. Da der Zusatzabstützbereich 92 gegenüber dem Hauptabstützbereich 84 des Abstützbereichs 82 in Längsrichtung der Federn zurückversetzt ist, berühren die Umfangsendbereiche 94, 96 der Zusatzfedern 88, 90 den Zusatzabstützbereich 92 im ersten Drehwinkelbereich nicht. Erst am Ende des ersten Drehwinkelbereichs, wenn die längere Zusatzfeder 90 den Zusatzabstützbereich 92 berührt und der Relativdrehung der beiden Dämpferelemente entgegenzuwirken beginnt, setzt sich die Federhärte der Dämpferfedereinheit 81 aus den Federhärten der Hauptfeder 86 und der Zusatzfeder 90 zusammen und ein zweiter Drehwinkelbereich beginnt. Ab dem Drehwinkel, bei dem auch die Zusatzfeder 88 mit ihrem Umfangsendbereich 96 den Zusatzabstützbereich 92 berührt wirken alle drei Federn 86, 88, 90 dem auf die Dämpferanordnung ausgeübten Drehmoment entgegen.

Zusätzliche Stufen mit unterschiedlichen Federhärten der Dämpferfederanordnung und/oder ein flexibles Einstellen der Federhärten in den Drehwinkelbereichen können durch Weiterbildung der Erfindung dadurch erreicht werden, dass in einer Dämpferfedereinheit drei oder mehr Federn als Haupt- und Zusatzfedern ineinander geschachtelt sind, zwei oder mehr Dämpferfedereinheiten aus jeweils zwei oder mehr ineinander geschachtelten Federn bestehen und/oder wenigstens zwei Zusatzfedern aus verschiedenen Dämpfereinheiten bei der Neutral-Relativdrehlage gleich lang oder verschieden lang sind bzw. unterschiedliche Federkonstanten aufweisen.

## Patentansprüche

1. Hydrodynamische Kopplungseinrichtung (10), insbesondere Drehmomentwandler, umfassend ein an eine Antriebswelle koppelbares Gehäuse (12) mit einem Pumpenrad (16) und ein in einem Innenraum (20) des Gehäuses (12) angeordnetes, vom Pumpenrad (16) antreibbares mit einer Abtriebswelle koppelbares Turbinenrad (22), eine Überbrückungskupplung (44) zur wahlweisen Kopplung des Gehäuses (12) mit einem Abtriebsorgan (28) und eine Dämpferanordnung (26) im Drehmorrientübertragungsweg zu dem Abtriebsorgan (28), die Dämpferanordnung (26) umfassend
ein erstes Dämpferelement (30) und ein gegen die Wirkung einer Dämpferfederanordnung (34) bezüglich des ersten Dämpferelements (30) um eine Drehachse (A) drehbares zweites Dämpferelement (32), wobei die Dämpferfederanordnung (34) eine Mehrzahl von in Umfangsrichtung verteilt liegenden Dämpferfedereinheiten (68, 68a, 68b, 68c, 68d; 81) aufweist und in Zuordnung zu jeder Dämpferfedereinheit (68, 68a, 68b, 68c, 68d; 81) am ersten Dämpferelement (30) und am zweiten Dämpferelement (32) Abstützbereiche (76, 76a, 76b, 76c, 76d; 80, 82) zum Abstützen der Umfangsendbereiche (73, 73a, 73b, 73c, 73d, 78, 78c; 94, 96) der Dämpferfedereinheiten (68, 68a, 68b, 68c, 68d; 81) vorgesehen sind,
wobei wenigstens eine Dämpferfedereinheit (68, 68a, 86b, 68c, 68d; 81) wenigstens eine Hauptfeder (72; 72, 72c; 86) umfasst und in Zuordnung zu wenigstens einer Hauptfeder (72; 72, 72c; 86) wenigstens eine Zusatzfeder (74; 74, 74c; 88, 90) umfasst, wobei Hauptfeder (72; 72, 72c; 86) und Zusatzfeder (74; 74, 74c; 88, 90) ineinander geschachtelt angeordnet sind,
und wobei bei Relativdrehung der Dämpferelemente (30, 32) bezüglich einander in einem ersten Drehwinkelbereich nur die Hauptfedern (72, 72a, 72b, 72c, 72d; 86) durch Abstützen an Abstützbereichen (76, 76a, 76b, 76c, 76d; 80, 82) der Relativdrehung entgegen wirken, während im ersten Drehwinkelbereich die wenigstens eine Zusatzfeder (74; 74, 74c; 88, 90) der Relativdrehung der Dämpferfederelemente (30, 32) nicht entgegen wirkt, und in einem an den ersten Drehwinkelbereich anschließenden zweiten Drehwinkelbereich die Hauptfedern (72, 72a, 72b, 72c, 72d; 86) und wenigstens eine Zusatzfeder (74; 74, 74c; 88, 90) durch Abstützen an Abstützbereichen (76, 76a, 76b, 76c, 76d; 80, 82) der Relativdrehung entgegenwirken,
**dadurch gekennzeichnet, dass** wenigstens eine der in Umfangsrichtung verteilt liegenden Dämpferfedereinheiten (68, 68a, 68b, 68c, 68d; 81) keine Zusatzfeder umfasst.

2. Hydrodynamische Kopplungseinrichtung nach Anspruch 1,
**dadurch gekennzeichnet, dass** bei in einer Neutral-Relativdrehlage bezüglich einander positionierten Dämpferelementen (30, 32) wenigstens eine einer Hauptfeder (72; 72, 72c) zugeordnete Zusatzfeder (74; 74, 74c) kürzer ist als die Hauptfeder (72; 72, 72c).

3. Hydrodynamische Kopplungseinrichtung nach Anspruch 1 oder 2,
**dadurch gekennzeichnet, dass** bei in einer Neutral-Relativdrehlage bezüglich einander positionierten Dämpferelementen (30, 32) wenigstens eine einer Hauptfeder (86) zugeordnete Zusatzfeder (88, 90) mindestens so lang ist, wie die Hauptfeder (86).

4. Hydrodynamische Kopplungseinrichtung nach einem der vorhergehenden Ansprüche,
**dadurch gekennzeichnet, dass** die einer Hauptfeder (72; 72, 72c; 86) zugeordnete wenigstens eine Zusatzfeder (74; 74, 74c; 88, 90) innerhalb der Hauptfeder (72; 72, 72c; 86) angeordnet ist.

## Claims

1. Hydrodynamic coupling device (10), in particular torque converter, comprising a housing (12) which can be coupled to a drive input shaft and which has a pump wheel (16), and comprising a turbine wheel (22) which is arranged in an interior (20) of the housing (12) and which can be driven by the pump wheel (16) and coupled to a drive output shaft, comprising a lockup clutch (44) for the selective coupling of the housing (12) to a drive output element (28), and comprising a damper arrangement (26) in the torque transmission path to the drive output element (28), the damper arrangement (26) comprising
a first damper element (30) and a second damper element (32) which is rotatable relative to the first damper element (30) about an axis of rotation (A) counter to the action of a damper spring arrangement (34),
wherein the damper spring arrangement (34) has a multiplicity of damper spring units (68, 68a, 68b, 68c, 68d; 81) situated so as to be distributed in the circumferential direction, and support regions (76, 76a, 76b, 76c, 76d; 80, 82) for supporting the circumferential end regions (73, 73a, 73b, 73c, 73d, 78, 78c; 94, 96) of the damper spring units (68, 68a, 68b, 68c, 68d; 81) are provided, so as to be assigned to each damper spring unit (68, 68a, 68b, 68c, 68d; 81), on the first damper element (30) and on the second damper element (32),
wherein at least one damper spring unit (68, 68a, 68b, 68c, 68d; 81) comprises at least one main spring (72; 72, 72c; 86) and comprises at least one auxiliary spring (74; 74, 74c; 88, 90) assigned to at least one main spring (72; 72, 72c; 86), wherein the main spring (72; 72, 72c; 86) and auxiliary spring (74; 74, 74c; 88, 90) are nested one inside the other,
and wherein, in the event of a relative rotation of the damper elements (30, 32) with respect to one another in a first rotational angle range, only the main springs (72, 72a, 72b, 72c, 72d; 86) counteract the relative rotation by being supported on support regions (76, 76a, 76b, 76c, 76d; 80, 82), whereas in the first rotational angle range, the at least one auxiliary spring (74; 74, 74c; 88, 90) does not counteract the relative rotation of the damper spring elements (30, 32), and in a second rotational angle range which adjoins the first rotational angle range, the main springs (72, 72a, 72b, 72c, 72d; 86) and at least one auxiliary spring (74; 74, 74c; 88, 90) counteract the relative rotation by being supported on support regions (76, 76a, 76b, 76c, 76d; 80, 82),
**characterized in that** at least one of the damper spring units (68, 68a, 68b, 68c, 68d; 81) situated so as to be distributed in the circumferential direction does not comprise an auxiliary spring.

2. Hydrodynamic coupling device according to Claim 1, **characterized in that**, when the damper elements (30, 32) are positioned in a neutral relative rotational position with respect to one another, at least one auxiliary spring (74; 74, 74c) assigned to a main spring (72; 72, 72c) is shorter than the main spring (72; 72, 72c).

3. Hydrodynamic coupling device according to Claim 1 or 2, **characterized in that**, when the damper elements (30, 32) are positioned in a neutral relative rotational position with respect to one another, at least one auxiliary spring (88, 90) assigned to a main spring (86) is at least as long as the main spring (86).

4. Hydrodynamic coupling device according to one of the preceding claims, **characterized in that** the at least one auxiliary spring (74; 74, 74c; 88, 90) assigned to a main spring (72; 72, 72c; 86) is arranged within the main spring (72; 72, 72c; 86).

## Revendications

1. Dispositif d'accouplement hydrodynamique (10), en particulier convertisseur de couple, comprenant un boîtier (12) pouvant être accouplé à un arbre d'entraînement, avec une roue de pompe (16) et une roue de turbine (22) disposée dans un espace interne (20) du boîtier (12) pouvant être entraînée par la roue de pompe (16) et pouvant être accouplée à un arbre de sortie, un embrayage de pontage (44) pour l'accouplement sélectif du boîtier (12) à un organe de sortie (28) et un agencement d'amortisseur (26) dans la voie de transfert de couple à l'organe de sortie (28), l'agencement d'amortisseur (26) comprenant un premier élément amortisseur (30) et un deuxième élément amortisseur (32) pouvant tourner autour d'un axe de rotation (A) à l'encontre de l'effet d'un agencement de ressort amortisseur (34) par rapport au premier élément amortisseur (30), l'agencement de ressort amortisseur (34) présentant une pluralité d'unités de ressort amortisseur (68, 68a, 68b, 68c, 68d ; 81) réparties dans la direction périphérique et des régions de support (76, 76a, 76b, 76c, 76d ; 80, 82) pour supporter les régions d'extrémité périphériques (73, 73a, 73b, 73c, 73d, 78, 78c ; 94, 96) des unités de ressort amortisseur (68, 68a, 68b, 68c, 68d; 81) étant prévues en association avec chaque unité de ressort amortisseur (68, 68a, 68b, 68c, 68d ; 81) sur le premier élément amortisseur (30) et sur le deuxième élément amortisseur (32),
au moins une unité de ressort amortisseur (68, 68a, 68b, 68c, 68d; 81) comprenant au moins un ressort principal (72; 72, 72c; 86) et, en association avec au moins un ressort principal (72 ; 72, 72c ; 86), au moins un ressort supplémentaire (74; 74, 74c; 88, 90), le ressort principal (72; 72, 72c; 86) et le ressort supplémentaire (74; 74, 74c; 88, 90) étant disposés de manière emboîtée l'un dans l'autre,
et lors de la rotation relative des éléments amortisseurs (30, 32) l'un par rapport à l'autre dans une première plage d'angle de rotation, seuls les ressorts principaux (72, 72a, 72b, 72c, 72d ; 86) agissant à l'encontre de la rotation relative par support contre des régions de support (76, 76a, 76b, 76c, 76d ; 80, 82), tandis que dans la première plage d'angle de rotation, l'au moins un ressort supplémentaire (74 ; 74, 74c ; 88, 90) n'agissant pas à l'encontre de la rotation relative des éléments de ressort amortisseur (30, 32), et dans une deuxième plage d'angle de rotation se raccordant à la première plage d'angle de rotation, les ressorts principaux (72, 72a, 72b, 72c, 72d ; 86) et au moins un ressort supplémentaire (74 ; 74, 74c ; 88, 90) agissant à l'encontre de la rotation relative par support contre des régions de support (76, 76a, 76b, 76c, 76d ; 80, 82),
**caractérisé en ce qu'**au moins l'une des unités de ressort amortisseur (68, 68a, 68b, 68c, 68d ; 81) réparties dans la direction périphérique ne comprend aucun ressort supplémentaire.

2. Dispositif d'accouplement hydrodynamique selon la revendication 1, **caractérisé en ce que** lorsque les éléments amortisseurs (30, 32) sont positionnés dans une position de rotation relative neutre l'un par rapport à l'autre, au moins un ressort supplémentaire (74 ; 74, 74c) associé à un ressort principal (72 ; 72, 72c) est plus court que le ressort principal (72 ; 72, 72c).

3. Dispositif d'accouplement hydrodynamique selon la revendication 1 ou 2, **caractérisé en ce que** lorsque les éléments amortisseurs (30, 32) sont positionnés dans une position de rotation relative neutre l'un par rapport à l'autre, au moins un ressort supplémentaire (88, 90) associé à un ressort principal (86) est au moins aussi long que le ressort principal (86).

4. Dispositif d'accouplement hydrodynamique selon l'une quelconque des revendications précédentes, **caractérisé en ce que** l'au moins un ressort supplémentaire (74 ; 74, 74c ; 88, 90) associé à un ressort principal (72 ; 72, 72c ; 86) est disposé à l'intérieur du ressort principal (72 ; 72, 72c ; 86).
